# EUROPÄISCHE PATENTSCHRIFT

(11) **EP 3 883 834 B1**
(45) Veröffentlichungstag und Bekanntmachung des Hinweises auf die Patenterteilung: **27.09.2023**
(21) Anmeldenummer: 19805612.9
(22) Anmeldetag: 13.11.2019
(51) Int. Cl.: B61D 27/00, B61D 17/10, B60H 1/14, B60N 3/04, B60H 1/00

(54) **FAHRZEUG MIT EINER BODENHEIZVORRICHTUNG**
VEHICLE WITH A FLOOR HEATING DEVICE
VÉHICULE AVEC UN SYSTÈME DE CHAUFFAGE DE PLANCHER

(30) Priorität: 21.11.2018 DE 102018129337
(43) Veröffentlichungstag der Anmeldung: 29.09.2021
(73) Patentinhaber: ALSTOM Holdings, 93400 Saint-Ouen-sur-Seine (FR)
(72) Erfinder: DINLER, Kenan, 2700 Wr. Neustadt (AT); PINTAG, Stefan, 1020 Wien (AT)
(74) Vertreter: Zimmermann & Partner Patentanwälte mbB
(86) Internationale Anmeldenummer: PCT/EP2019/081216
(87) Internationale Veröffentlichungsnummer: WO 2020/104278

(56) Entgegenhaltungen:
- EP-A1- 2 982 530
- EP-A1- 3 196 061
- WO-A1-2017/129709
- DE-A1-102010 056 208
- DE-A1-102016 117 150
- US-A1- 2017 368 906

## Beschreibung

### Technisches Gebiet

Die vorliegende Erfindung betrifft ein Fahrzeug mit einem Wagenkasten und einem Innenraum zum Transport von Fahrgästen. Weiterhin betrifft die Erfindung ein Verfahren zum Betrieb eines solchen Fahrzeugs.

### Vorbekannter Stand der Technik

Allgemein sind Fahrzeuge zum Transport von Fahrgästen bekannt, beispielsweise ausgebildet als Fahrzeug des öffentlichen Nahverkehrs, insbesondere als Straßenbahn, U-Bahn, S-Bahn, Omnibus, etc. Dabei werden die Innenräume solcher Fahrzeuge aufwendig klimatisiert, sodass der Komfort für Fahrgäste optimiert wird.

Weiterhin umfassen genannte Fahrzeuge zahlreiche Einrichtungen, welche während des Betriebs Wärme produzieren. Diesbezüglich ist es notwendig, ein geregeltes Abführen dieser Wärme zu ermöglichen, um die Einrichtungen vor Überhitzung zu schützen.

Die deutsche Offenlegungsschrift DE 10 2010 056 208 A1 offenbart ein Verfahren zum Beheizen eines Innenraumes eines Fahrzeugs, wobei das Kraftfahrzeug eine Brennstoffzelle, eine Klimamessvorrichtung, durch welche eine Messung eines Klimaparameters des Innenraums des Kraftfahrzeugs erfolgt, und eine Wärmeübertragungsvorrichtung zur Übertragung von Wärme aufweist. Dabei wird erreicht, dass durch eine Regelung der Wärmegenerierung der Brennstoffzelle in Abhängigkeit von dem Klimaparameter eine Beheizung des Innenraums erfolgen kann.
Die DE 10 2016 117 150 A1 beschreibt eine beheizbare Bodenmatte, die einfach entfernbar in den Fahrgastraum eines Fahrzeuges eingelegt werden kann. Dabei ist eine elektrische Heizung in die Bodenmatte eingebettet.
Die WO 2017 / 129 709 A1 beschreibt ein Heizsystem für den Boden eines Industriefahrzeuges. Dabei ist dieses Heizsystem fest im Industriefahrzeug installiert. Das beschriebene Heizsystem umfasst dabei einen Heizschlauch unterhalb des Bodenaufbaus.
Der Heizschlauch ist mit einem Fluid gefüllt. Der Schlauch ist von einem Material umgeben, das energiespeichernde Elemente aufweist, die beispielsweise aus einem PCM-Material bestehen.
Die Druckschrift EP 3 196 061 A1 beschreibt ein festinstalliertes fluid-basiertes Heizsystem für ein Passagierfahrzeug. Das Heizsystem umfasst ein Ventil, über das reguliert werden kann, ob das Fluid einem Kühlkreislauf oder einem Heizkreislauf zugeführt wird.

### Nachteile des Stands der Technik

Die bisher bekannten technischen Lösungen und Ausführungsformen sind jedoch entweder sehr komplex aufgebaut, gestatten keine effiziente Energienutzung bzw. -abfuhr und/oder weisen ergonomische Unzulänglichkeiten auf.

### Problemstellung

Aufgabe der vorliegenden Erfindung ist es daher, ein Fahrzeug bereitzustellen, das in effizienter Weise eingesetzte Energie nutzt und gleichzeitig die Nachteile des Stands der Technik zu verhindern oder zumindest zu mindern vermag.

### Erfindungsgemäße Lösung

Die obige Aufgabe wird durch ein Fahrzeug nach Anspruch 1 und/oder durch ein Verfahren nach Anspruch 11 gelöst. Weitere Ausführungsformen der genannten Gegenstände ergeben sich aus den abhängigen Unteransprüchen und/oder zusätzlich diskutierten Ausführungsformen.

Erfindungsgemäß weist das Fahrzeug einen Wagenkasten mit einem Innenraum auf, das fahrbar auf einem Untergrund, zum Beispiel mittels einzelner Räder oder Drehgestelle, abgestützt ist. Weiterhin ist ein Innenraum mit einem Boden vorgesehen, worin Fahrgäste sitzend und/oder stehend aufgenommen werden können. Ein solches Fahrzeug kann ein Fahrzeug des öffentlichen Personenverkehrs, also zum Beispiel ein Bus, eine Straßenbahn, eine S-Bahn, eine U-Bahn, ein Nahverkehrszug oder ein Schnellzug sein.

Weiterhin umfasst das Fahrzeug mindestens eine Wärme-produzierende Komponente. Insbesondere weist das Fahrzeug einen Fahrmotor, insbesondere einen elektrischen Fahrmotor, einen elektrischen Energiespeicher, eine Ladeeinrichtung dafür, leistungselektronische Einrichtungen, insbesondere für den Fahrmotor, einen Bordnetzumrichter zum Bereitstellen einer bestimmten Bordnetzspannung, einen Bremswiderstand zum Abführen von überschüssiger elektrischer Energie und/oder einen Kompressor zum Bereitstellen eines unter Druck stehenden Arbeitsmediums auf. Solche Komponenten haben gemeinsam, einen gewissen Anteil von aufgenommener Primärenergie in abzuführende Wärmeenergie - im Folgenden als Abwärme bezeichnet - umzuwandeln. Gemäß einer Ausgestaltung wird die Komponente mittels einer Flüssigkeit gekühlt.

Zudem ist das Fahrzeug mit einer Wärmeabgabevorrichtung zum gezielten Abführen von Wärme an eine Fahrzeugumgebung versehen. Diese Wärmeabgabevorrichtung ist über einen Abwärmekreislauf mit der Komponente verbunden, sodass Abwärme von der Komponente über den Abwärmekreis zur Wärmeabgabevorrichtung transportiert und dort an die Umgebung abgegeben werden kann.

Zusätzlich ist im Bereich des Bodens des Fahrzeug eine Bodenheizvorrichtung zum Beheizen des Bodens vorgesehen. Sie ist unter anderem mit einem Heizkreis verbunden, welcher dazu ausgebildet ist, Wärme von einer Wärme-erzeugenden Komponente, insbesondere Abwärme von einer der oben genannten Komponenten, in die Bodenheizvorrichtung zu transportieren. Dadurch kann der Boden des Fahrzeugs, insbesondere die Oberfläche des Bodens, erwärmt werden.

Weiterhin weist das Fahrzeug eine Einstelleinrichtung zum Einstellen einer Heizleistung der Bodenheizvorrichtung auf. Insbesondere ist die Einstelleinrichtung dazu ausgebildet, den Wärmetransport von der Komponente zur Bodenheizvorrichtung und/oder zur Wärmeabgabevorrichtung einstellen zu können.

Das Fahrzeug weist eine Feuchtedetektionseinrichtung zum Bestimmen einer Feuchtigkeit des Bodens auf. Dabei kann die Feuchtedetektionseinrichtung mit Elementen im Fahrzeug ausgestattet und/oder verbunden sein, sodass durch die Feuchtedetektionseinrichtung ein Signal erzeugt werden kann, das den Grad der Feuchtigkeit des Bodens und/oder das Vorhandensein von Wasser auf dem Boden repräsentiert. Dabei kann das Signal binär ausgebildet sein, sodass eine erste Ausprägung des Signals einen feuchten und/oder nassen Boden und eine zweite Ausprägung einen trockenen und/oder minder feuchten Boden repräsentiert.

Gemäß einer spezifischen Ausprägung der Feuchtedetektionseinrichtung kann der Grad einer Feuchtigkeit des Bodens zumindest in diskreten Stufen quantifizierbar sein und durch das Signal entsprechend repräsentiert werden.

Zudem ist die Steuervorrichtung zum Ansteuern der Einstelleinrichtung und zum Empfang von Daten von der Feuchtedetektionseinrichtung mit selbigen Einrichtungen verbunden. Weiterhin ist die Steuervorrichtung so ausgestaltet, dass diese mindestens aus dem empfangenen Signal der Feuchtedetektionseinrichtung ein Trocknungskriterium ableiten kann. Das Trocknungskriterium repräsentiert dabei, ob der Grad an Feuchtigkeit des Bodens akzeptabel ist, oder ob Maßnahmen gegen die Feuchtigkeit zu ergreifen sind. Gemäß einer Ausführungsform kann das Trocknungskriterium zwei Zustände einnehmen (positives und negatives Trocknungskriterium), wobei beim Vorliegen eines negativen Trocknungskriteriums der Feuchtigkeitsgrad des Bodens akzeptabel ist, und keine Gegenmaßnahmen ergriffen werden müssen. Hingegen steht ein positives Trocknungskriterium dafür, dass der Boden zu nass ist, und folglich Gegenmaßnahmen, insbesondere Trocknungsmaßnahmen, ergriffen werden müssen.

Entsprechend sind die Steuervorrichtung und die Einstelleinrichtung so ausgebildet, dass die Bodenheizvorrichtung aktiviert wird, wenn das positive Trocknungskriterium vorliegt. Erfindungsgemäß sind Steuervorrichtung und die Einstelleinrichtung derart konfiguriert und verbunden, sodass beim Vorliegen eines definierten, insbesondere positiven, Trocknungskriteriums ein Wärmetransport von der Komponente zur Bodenheizvorrichtung ausgeführt wird.

Mit einem solchen Fahrzeug wird erstmalig eine erhebliche Steigerung von Komfort und Sicherheit von Fahrgästen erreicht, indem der Boden des Fahrzeugs nach Bedarf, insbesondere automatisch, durch Aktivierung der Bodenheizvorrichtung getrocknet werden kann. Wenn also festgestellt wird, dass die Feuchtigkeit des Bodens ein akzeptables Grenzmaß überschreitet - beispielsweise wenn ansonsten der Boden zu rutschig werden bzw. ein entsprechender Haftreibungskoeffizient unter einen gewissen Grenzwert fallen sollte - wird der Boden erwärmt, sodass unerwünschte Feuchtigkeit/Nässe des Bodens verdampft und in den Innenraum abgegeben wird. So wird effektiv verhindert, dass sich Nässe, Eis und/oder Schnee im Innenraum ansammelt. Dies führt zu einer erheblichen Reduktion einer Rutsch- und Sturzgefahr für Fahrgäste.

Gemäß einer besonderen Ausführungsform ist das Fahrzeug ein sogenanntes elektrisch betriebenes Multisystemfahrzeug, wobei dieses über eine externe Stromversorgung und eine unabhängige interne Stromversorgung verfügt. Die externe Stromversorgung kann dabei mithilfe eines Stromabnehmers über eine Oberleitung oder eine Stromschiene erfolgen. Die interne Stromversorgung kann dabei durch elektrische Energiespeicher, zum Beispiel eine Batterie oder geeignete Kondensatoren, und durch eine Ladeeinrichtung dafür realisiert werden. Ein solches Multifunktionsfahrzeug kann sowohl unabhängig auf einer Nicht-elektrifiziert Strecke und auf einer elektrifizierten Strecke betrieben werden.

Gemäß einer Ausgestaltungsform umfasst die Feuchtedetektionseinrichtung mindestens einen Feuchtesensor zum Detektieren von Feuchtigkeit des Bodens. Beispielsweise kann ein solcher Feuchtesensor mittels Widerstandsmessung Rückschlüsse auf den Feuchtegrad des Bodens ermöglichen. Dabei ist denkbar, mehrere Stellen des Fahrzeugbodens, insbesondere in einem Türbereich des Fahrzeugs, auf Vorhandensein von Feuchtigkeit zu überprüfen.

Zusätzliche oder alternativ dazu kann die Feuchtedetektionseinrichtung bzw. das Fahrzeug einen Regensensor zum Detektieren von Regen in der Fahrzeugumgebung aufweisen. Denn schon allein die Kenntnis, ob es in der unmittelbaren Fahrzeugumgebung regnet oder nicht, lässt, insbesondere bei Fahrzeugen mit hoher Anhalte- und Passagierwechselfrequenz, eine Bestimmung eines Trocknungskriteriums zu.

Möglicherweise könnte sinnvoll sein, in diesem Zusammenhang die Anzahl von einsteigenden Fahrgästen zu bestimmen oder abzuschätzen. Die Bestimmung des Trocknungskriteriums könnte dann wie folgt ablaufen: Sobald es an einer Haltestelle eines Fahrzeugs über ein gewisses Grenzmaß hinaus regnet, und eine gewisse Grenzanzahl von zu steigenden Fahrgästen überschritten wird, so würde das Trocknungskriterium derart bestimmt werden können, dass der Boden zu trocknen wäre (positives Trocknungskriterium liegt vor).

In Erweiterung des Grundprinzips wird vorgeschlagen, die Feuchtedetektionseinrichtung mit externen Datenquellen zum Wetterzustand der Fahrzeugumgebung zur verbinden zu können. Beispielsweise kann mittels Daten eines Regenradars, analog zum Regensensor, festgestellt bzw. abgeschätzt werden, ob es in unmittelbarer Fahrzeugumgebung regnet.

Gemäß einer weiteren Ausführungsform kann das Fahrzeug eine erste Luftfeuchtigkeitsmesseinrichtung zum Messen einer Luftfeuchtigkeit im Innenraum und/oder eine erste Temperaturmesseinrichtung zum Messen einer Innentemperatur aufweisen. Diese Messeinrichtungen können der Feuchtedetektionseinrichtung derart zugeordnet werden, sodass auf Basis dieser Daten auch ein Rückschluss über den Feuchtigkeitszustand des Bodens gezogen werden kann. Insbesondere könnten Messergebnisse über Temperatur und Luftfeuchtigkeit im Innenraum in Kombination mit obig beschriebener Sensorik und/oder Daten präzise Aussagen über den Feuchtigkeitszustand des Bodens zu lassen, sodass das Trocknungskriterium präzise bestimmt werden kann.

Messdaten über Temperatur und/oder Feuchtigkeit im Innenraum können besonders vorteilhaft verwendet werden, wenn das Fahrzeug über eine Klimatisierungsvorrichtung zum Manipulieren der Innentemperatur und/oder der Feuchtigkeit im Innenraum verfügt. Insbesondere kann die Steuervorrichtung derart mit der Klimatisierungsvorrichtung verbunden sein, sodass die Klimatisierungsvorrichtung Maßnahmen zur Trocknung der Luft im Innenraum ausführt, wenn die Luftfeuchtigkeit einen gewissen Grenzwert überschreitet. Dieser Grenzwert kann wiederum von der Temperatur im Innenraum abhängig sein.

Dies bewirkt, dass zum einen der Boden des Innenraums mittels der Bodenheizvorrichtung getrocknet werden kann, wenn ein positives Trocknungskriterium vorliegt, d. h., wenn der Boden zu nass ist. Die dann in den Innenraum verdunstende Feuchtigkeit wird wiederum mittels der Klimatisierungsvorrichtung in die Umgebung abgeführt. Auf diese Weise wird erreicht, dass der Boden gezielt getrocknet werden kann, jedoch ein Ansteigen der Luftfeuchtigkeit im Innenraum effektiv vermieden wird. Auf diese Weise wird der Komfort für Fahrgäste im Innenraum bei Erhöhung der Verkehrssicherheit sichergestellt.

Weiterhin ist denkbar, eine zweite Luftfeuchtigkeitsmesseinrichtung zum Messen einer Luftfeuchtigkeit der Fahrzeugumgebung und/oder eine zweite Temperaturmesseinrichtung zum Messen einer Umgebungstemperatur vorzusehen.

Alle oder ein Teil der genannten Messeinrichtungen sind mit der Steuervorrichtung des Fahrzeugs mindestens zum Datenaustausch bzw. zum Übertragen von Daten an die Steuervorrichtung verbunden.

Weiterhin umfasst das Fahrzeug ein Arbeitsmedium zum Transport der Wärme der Komponente in den Heizkreis und/oder in den Abwärmekreis. Das Arbeitsmedium kann dabei zumindest während eines Wärmeübergangs von der Komponente in das Arbeitsmedium eine Flüssigkeit sein.

Die Begriffe "Heizkreis" und "Abwärmekreis" müssen im Kontext dieser Erfindung nicht zwingend als für sich gesehene geschlossene Kreisläufe interpretiert werden, sondern können auch fürfunktionale Abschnitte eines Fluidkreislaufs stehen. Wird beispielsweise Wärme von der Komponente zur Bodenheizvorrichtung transportiert, so zirkuliert das Arbeitsmedium in einem, vorzugsweise geschlossenen, Kreislauf zwischen einem Komponentenwärmetauscher der Komponente und einem Wärmetauscher der Bodenheizvorrichtung. Alternativ formuliert, so zirkuliert das Arbeitsmedium in diesem Fall zwischen dem Heizkreis und der Komponente. Wird die Wärme der Komponente zur Wärmeabgabevorrichtung transportiert, so zirkuliert das Arbeitsmedium zwischen der Komponente und dem Abwärmekreis.

Gemäß einer bevorzugten Ausführungsform ist ein Fluidkreislauf mit einem Phasenübergang des Arbeitsmediums vorgesehen, wobei der Heizkreis und/oder der Abwärmekreis zumindest Teil des Fluidkreislaufs ist/sind. Insbesondere ist/sind Heizkreis und/oder Abwärmekreis als Fluidkreis mit einem Phasenübergang des Arbeitsmediums ausgebildet. Entsprechend können mindestens eine Verflüssigungseinrichtung und eine Vergasereinrichtung im Heizkreis und/oder im Abwärmekreis und/oder an geeigneter Stelle in einem beteiligten Fluid(teil)kreislauf vorgesehen sein. Auf diese Weise kann der Wärmetransport optimiert werden, sodass beispielsweise die Komponente stärker gekühlt wird, eine höhere Heizleistung für die Bodenheizvorrichtung und/oder mehr Wärme über die Wärmeabgabevorrichtung abgegeben werden kann.

Nach einer Ausführungsform kann die Einstelleinrichtung mindestens einen Fluidmanipulator, insbesondere jedoch mindestens zwei Fluidmanipulatoren umfassen. Mit diesen kann beeinflusst werden, ob das Arbeitsmedium zwischen Heizkreis und Komponente und/oder zwischen Abwärmekreis und Komponente zirkuliert.

Gemäß einer spezifischen Ausführungsform, ist die Einstelleinrichtung derart mit Fluidmanipulatoren ausgestattet, sodass unterschiedliche Betriebszustände für Heizkreis und/oder Abwärmekreis dargestellt werden können.

Gemäß einem ersten Betriebszustand zirkuliert das Arbeitsmedium ausschließlich zwischen der Komponente und dem Heizkreis, sodass Abwärme der Komponente ausschließlich über den Heizkreis und die Bodenheizvorrichtung abgeführt wird.

Gemäß einem zweiten Betriebszustand wird der Heizkreis von der Wärmezufuhr abgekoppelt. Das Arbeitsmedium zirkuliert somit ausschließlich zwischen der Komponente und dem Abwärmekreis.

Befindet sich das System im ersten oder zweiten Betriebszustand sind Heizkreis und Abwärmekreis mindestens stofflich voneinander getrennt, sodass im ersten Betriebszustand der Abwärmekreis, und im zweiten Betriebszustand der Heizkreis deaktiviert ist.

Gemäß einer Ausführungsform kann die Einstelleinrichtung den Fluidmanipulator derart ansteuern, sodass gemäß einem dritten Betriebszustand der Heizkreis und der Abwärmekreis parallel betrieben werden. Das durch einen Komponentenwärmetauscher der Komponente strömende Arbeitsmedium wird folglich durch einen Fluidmanipulator je nach Bedarf in den Heizkreis und/oder in den Abwärmekreis gespeist, wobei das Arbeitsmedium nach der Bodenheizvorrichtung bzw. der Wärmeabgabevorrichtung wieder zusammengeführt wird. Der dritte Betriebszustand zeigt sich besonders dann als vorteilhaft, wenn die Komponente mehr Abwärme zur Verfügung stellt, als die Bodenheizvorrichtung oder die Wärmeabgabevorrichtung alleine abnehmen kann.

Weiterhin kann die Einstelleinrichtung gemäß einem weiteren zusätzlichen oder alternativen Ausführungsbeispiel derart ausgebildet sein, dass Bodenheizvorrichtung und Wärmeabgabevorrichtung seriell durch das Arbeitsmedium beaufschlagt werden. Bei diesem vierten Betriebszustand sind Fluidmanipulatoren derart vorgesehen, sodass Heizkreis und Abwärmekreis zumindest teilweise in Reihe geschaltet sind.

Gemäß einer optionalen Ausgestaltung einer oder mehrerer der oben beschriebenen Ausführungsformen für unterschiedliche Betriebszustände erfährt das Arbeitsmedium an geeigneter Stelle einen Phasenwechsel von flüssig zu gasförmig und zurück. Insbesondere ist denkbar, dass das Arbeitsmedium nach der Verflüssigungseinrichtung eine Temperatur von 40 °C bis 50 °C aufweist.

Indem das Arbeitsmedium beim Betrieb gemäß viertem Betriebszustand zusätzlich mit einem Phasenwechsel gehandhabt wird, kann die serielle Konfiguration von Heizkreis und Abwärmekreis zu einer weiteren Verbesserung der Gesamtwirkung führen. Insbesondere ist dabei eine Verflüssigungseinrichtung strömungstechnisch vor der Bodenheizvorrichtung vorzusehen, sodass die von der Kompression und Verflüssigung zusätzlich dem Arbeitsmedium hinzugefügte Energie über die Bodenheizvorrichtung in Form von Trocknungswärme in den Innenraum abgegeben werden kann. Strömungstechnisch der Bodenheizvorrichtung nachgeschaltet und der Wärmeabgabevorrichtung vorgeschaltet wäre eine Vergasereinrichtung anzusiedeln. Auf diese Weise würde die Kondensation des Arbeitsmediums zumindest teilweise innerhalb der Wärmeabgabevorrichtung stattfinden, sodass diese im vierten Betriebszustand Wärmeenergie aus der Fahrzeugumgebung aufnehmen würde. In einem solchen vierten Betriebszustand fungiert die Wärmeabgabevorrichtung als Wärmeaufnahmevorrichtung. Nachdem das Arbeitsmedium diese Wärmeaufnahmevorrichtung passiert hat, wird es vorgewärmt zur Komponente zurückgeführt und dort durch den Komponentenwärmetauscher weiter aufgewärmt.

Weiterhin wird ein Verfahren zum Betrieb eines Fahrzeugs nach einem der vorangestellten Ausführungsformen offenbart, welches mindestens die folgenden Schritte vorsieht:

Mithilfe der Feuchtedetektionseinrichtung wird die Feuchtigkeit, insbesondere der Grad einer Feuchtigkeit, des Bodens im Fahrzeuginnenraum bestimmt. Dies kann auch bedeuten, dass der Grad einer Feuchtigkeit des Bodens anhand von indirekten Daten abgeschätzt wird, zum Beispiel indem überprüft wird, ob es in der Umgebung des Fahrzeugs regnet und eine gewisse Anzahl von Fahrgästen (z.B. mit nassen Schuhen) zugestiegen sind.

Abhängig von der detektierten Feuchtigkeit des Bodens, oder in Abhängigkeit von einem Signal der Feuchtedetektionseinrichtung, wird das Trocknungskriterium bzw. ein Zustand des Trocknungskriteriums bestimmt. Beim Vorliegen eines positiven Trocknungskriteriums wird die Einstelleinrichtung, insbesondere mindestens ein Fluidmanipulator der Einstelleinrichtung, durch die Steuervorrichtung derart angesteuert, sodass ein Wärmetransport von der Komponente zur Bodenheizvorrichtung stattfindet. Gegebenenfalls wird im Vorfeld überprüft, ob die Komponente sich in einem Betriebszustand befindet, in welchem überschüssige Wärme abzuführen ist.

Gemäß einer weiteren Ausführungsform des Verfahrens wird offenbart, dass die Klimatisierungsvorrichtung, insbesondere während eines Betriebs der Bodenheizvorrichtung, derart angesteuert wird, sodass die Luftfeuchtigkeit in dem Innenraum des Fahrzeugs einen bestimmten Schwellwert nicht überschreitet. Insbesondere kann der Schwellwert auch von der Luftfeuchtigkeit und/oder der Temperatur der Umgebung, und/oder von der Temperatur im Innenraum abhängen.

Die voranstehenden beschriebenen Ausführungsformen können beliebig, jedoch insbesondere aus Sicht des Fachmanns in sinnhafter Weise miteinander kombiniert werden; beispielsweise ist denkbar, dass das Fahrzeug mehrere Wärme-abgebende Komponenten aufweist, welche im Zusammenhang mit einer oder mehreren der voranstehenden Ausführungsformen Abwärme in das entsprechende System bzw. in den Fluidkreislauf abgeben. Je nach Bedarf können diese Komponenten oder deren Wärmetauscher sinnvoll zusammengefasst, seriell und/oder parallel angeordnet werden. Kurzbeschreibung der Figuren

Die beiliegende Zeichnung veranschaulicht eine Ausführungsform und dient zusammen mit der Beschreibung der Erläuterung der Prinzipien der Erfindung. Die Elemente der Zeichnung sind relativ zueinander und nicht notwendigerweise maßstabsgetreu.

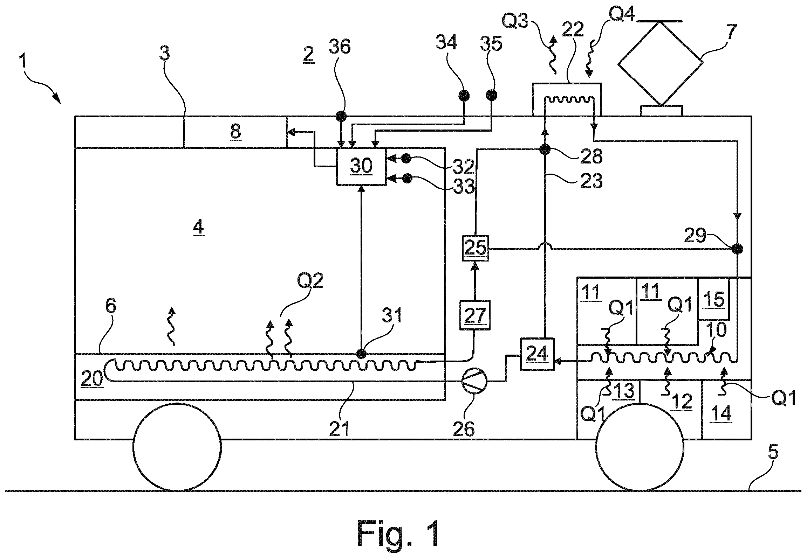

Fig. 1 zeigt ein Fahrzeug gemäß einer exemplarischen Ausführungsform.

### Ausführungsbeispiele

Mithilfe der Fig. 1 wird eine exemplarische Ausgestaltung eines Ausführungsbeispiels eines Fahrzeugs 1 wiedergegeben. Das Fahrzeug 1 ist hierbei als eine auf Schienen 5 geführte Straßenbahn mit einem Stromabnehmer 7 ausgebildet. Mittels des Stromabnehmers 7 wird eine Versorgung von elektrischen Komponenten, insbesondere eines Fahrmotor 13, eines elektrischen Energiespeichers 11, einer Ladeeinrichtung 15 und von leistungselektronische Einrichtungen 12 mit elektrischer Energie sichergestellt, wobei dafür möglicherweise notwendige Stromleitungen, weitere Steuer- und Schaltungselemente hier nicht dargestellt sind.

Ein Wagenkasten 3 des Fahrzeugs 1 bildet einen Innenraum 4 mit einem Boden 6, wobei der Innenraum 4 zum stehenden und/oder sitzenden Transport von Fahrgästen ausgebildet ist, und weiterhin eine nicht dargestellte Türvorrichtung zum Ein- und Aussteigen und/oder eine Fahrerkabine aufweisen kann.

Im Boden 6 oder in unmittelbarer Umgebung dazu ist eine Bodenheizvorrichtung 20 verbaut, die eine Trocknungswärme Q2 über die Oberfläche des Bodens 6 in den Innenraum 4 abgeben kann. Dazu weist die Bodenheizvorrichtung 20 zumindest in Teilen einen Heizkreis 21 auf, der zum Wärmetransport mit einer Wärmetauschvorrichtung 10 der elektrischen Komponente strömungstechnisch verbunden ist.

In diesem Zusammenhang ist anzumerken, dass die spezielle Darstellung einer Wärmetauschvorrichtung 10 einer elektrischen Komponente nicht limitieren zu verstehen ist. Vielmehr repräsentiert die Wärmetauschvorrichtung 10 gegebenenfalls auch einen parallelen und/oder seriellen Zusammenschluss mehrerer einzelner Wärmetauscher beispielsweise des Fahrmotors 13, des elektrischen Energiespeichers 11, der Ladeeinrichtung 15, der leistungselektronische Einrichtungen 12 und/oder eines Bremswiderstands 14.

Diese elektrischen Komponenten und die Wärmetauschvorrichtung 10 können derart ausgebildet und angeordnet sein, sodass eine Abwärme Q1 der elektrischen Komponente auf ein Arbeitsmedium der Wärmetauschvorrichtung 10 übertragbar ist.

Im gezeigten Ausführungsbeispiel kann die Wärmetauschvorrichtung 10 mittels geeigneter Leitungen und Fluidmanipulatoren 24 und 25 in Reihe mit dem Heizkreis 21 verbunden werden.

Zudem ist die Wärmetauschvorrichtung 10 mittels geeigneter Leitungen und Fluidmanipulatoren 24 und 25 seriell mit einer Wärmeabgabevorrichtung 22 verbindbar.

Die Fluidmanipulatoren 24 und 25 sind Teil einer Einstelleinrichtung zum Einstellen der Bodenheizvorrichtung 20 und können als Dreiwegeventile ausgebildet sein, die einen Volumenstrom des Arbeitsmediums je nach Bedarf auf unterschiedliche Leitungen verteilen können.

Im vorliegenden Beispiel sind eine Verflüssigungseinrichtung 26 und eine Vergasereinrichtung 27 wirksam im Fluidkreislauf vorgesehen, sodass - bei Auswahl eines geeigneten Arbeitsmediums - ein zweiphasiger Arbeitsbetrieb des Arbeitsmediums ermöglicht wird. Unabhängig davon ist dieses Ausführungsbeispiel nicht einschränkend zu verstehen. Insbesondere können die Vergasereinrichtung 27 und die Verflüssigungseinrichtung 26 weggelassen werden, wobei der entsprechende Fluidkreislauf in analoger Weise, jedoch ohne vorteilhafte Energieaufnahme und Übertragungscharakteristika eines zweiphasigen Betriebs arbeitet.

Weiterhin umfasst das Fahrzeug 1 eine Steuervorrichtung 30 die mindestens zum Datenempfang mit einer Feuchtedetektionseinrichtung 31 des Bodens 6, mit einer ersten Luftfeuchtigkeitsmesseinrichtung 32 und einer ersten Temperaturmesseinrichtung 33 des Innenraums 4, mit einer zweiten Luftfeuchtigkeitsmesseinrichtung 34 und einer zweiten Temperaturmesseinrichtung 35 für die Fahrzeugumgebung 2 und mit einem Regensensor 36 des Wagenkastens 3 verbunden ist. Weiterhin kann die Steuervorrichtung 30 mit Mitteln zum Empfang von externen Daten, insbesondere von Wetterdaten, zum Beispiel aus dem Internet, ausgestattet sein. Die Verbindung der Steuervorrichtung 30 mit genannter Sensorik ist nicht einschränkend zu verstehen, sondern solche Verbindungen sind je nach Ausführungsbeispiel bzw. Betriebszustand sinnvoll vorzusehen.

Die Steuervorrichtung 30 ist in geeigneter Weise über nicht dargestellte Verbindung zum Ansteuern mit Fluidmanipulatoren 24, 25, der Verflüssigungseinrichtung 26, mit einer nicht dargestellte Pumpe des Fluidkreislaufs, mit einem Temperatursensor der Wärmetauschvorrichtung 10 etc. verbunden.

Im Folgenden werden Aspekte unterschiedlicher Betriebszustände, Ausführungsformen und Verfahrensschritte anhand des konkreten Beispiels gemäß Fig. 1 beschrieben:

Nachdem das Arbeitsmedium in der Wärmetauschvorrichtung 10 mit einer Abwärme Q1 der Wärme-abgebenden Komponenten beaufschlagt wurde, wird es - je nach Betriebszustand - in den entsprechenden Fluidkreislauf weitergeleitet. Dazu kann eine Pumpe vorgesehen sein.

Gemäß einer Ausführungsform mit einem ersten Betriebszustand ist der Fluidmanipulator 24 der Einstelleinrichtung so geschaltet, dass das gesamte Arbeitsmedium der Verflüssigungseinrichtung 26 zugeführt wird. Das danach flüssige und durch die Verflüssigung zusätzlich erwärmte Arbeitsmedium durchläuft dann den Heizkreis 21 und gibt in einem Wärmetauscher des Heizkreises 21 die Trocknungswärme Q2 an den Boden 6 ab und erwärmt diesen. Dies hat zur Folge, dass Flüssigkeit des Bodens 6 in den Innenraum 4 verdampft. Nach dem Heizkreis 21 durchläuft das flüssige Arbeitsmedium die Vergasereinrichtung 27 und wird über einen geeignet geschalteten Fluidmanipulator 25 (und über einen Rücklaufknoten 29) in die Wärmetauschvorrichtung 10 der Komponente zurückgefördert. Die Vergasereinrichtung 27 bewirkt eine Abkühlung des Arbeitsmediums, sodass in der Wärmetauschvorrichtung 10 ein erhöhtes Temperaturgefälle zwischen dem Arbeitsmedium und der Abwärme Q1 abgebende Komponente vorherrscht.

In einem zweiten Betriebszustand wird das gesamte Arbeitsmedium durch entsprechende Stellung des Fluidmanipulator 24 in den Abwärmekreis 23 der Wärmeabgabevorrichtung 22 des Fahrzeugs 1 und von daraus zurück in die Wärmetauschvorrichtung 10 geleitet. Der Heizkreis 21 ist somit isoliert und abgekoppelt. So könnte die Abwärme Q1 der Komponente in Form von durch die Wärmeabgabevorrichtung 22 abgegebene Wärme Q3 in die Fahrzeugumgebung 2 abgeführt werden.

Bezüglich des zweiten Betriebszustands ist denkbar, jedoch in Fig. 1 nicht dargestellt, eine Verflüssigungseinrichtung und eine Vergasereinrichtung sinnvoll in den Fluidkreislauf und/oder in den Abwärmekreis einzubringen, sodass auch im reinen Kühlbetrieb mit der Wärmeabgabevorrichtung 22 ein zweiphasiger Betrieb ermöglicht wird.

Gemäß einem dritten Betriebszustand wird der Heizkreis 21 der Bodenheizvorrichtung 20 und der Abwärmekreis 23 der Wärmeabgabevorrichtung 22 parallel zur Wärmetauschvorrichtung 10 betrieben. Eine geeignete Einstellung des ersten Fluidmanipulators 24, und gegebenenfalls auch des zweiten Fluidmanipulators 25, führt dazu, dass ein Teil des Arbeitsmediums durch den Heizkreis 21, ein anderer Teil des Arbeitsmediums durch den Abwärmekreis 23 strömt. Nach der Bodenheizvorrichtung 20 und der Wärmeabgabevorrichtung 22 können beide Kreise im Rücklaufknoten 29 zusammengeführt werden, worauf das gesamte, zusammengeführte Arbeitsmedium wieder der Wärmetauschvorrichtung 10 zugeführt wird.

Der dritte Betriebszustand ermöglicht, dass je nach Menge der verfügbaren Abwärme Q1, je nach Heiz- und/oder Trocknungsbedarf des Innenraums 4 und/oder je nach Kapazität der Wärmeabgabevorrichtung 22 ein optimaler Betriebspunkt eingestellt werden kann. Möglicherweise könnte der dritte Betriebszustand entweder vollständig ohne zweiphasigem Betrieb oder mit zweiphasigem Betrieb in beiden parallel angeordneten Kreisen realisiert werden. Entsprechend wären Verflüssigungseinrichtung und Vergasereinrichtung sinnvoll einfach oder in Mehrzahl vorzusehen.

Eine Betriebsführung gemäß einem vierten Betriebszustand beinhaltet, die Fluidmanipulatoren 24 und 25 derart zu schalten, sodass der Heizkreis 21 und der Abwärmekreis 23 im Wesentlichen seriell geschaltet werden. Entsprechend würde das Arbeitsmedium durch den Fluidmanipulator 24 ausschließlich in den Heizkreis 21 geleitet werden. Darauf folgend würde aufgrund einer geeigneten Schaltung des Fluidmanipulators 25 das Arbeitsmediums ausschließlich und vollständig durch den Abwärmekreis 23 bzw. durch die Wärmeabgabevorrichtung 22 geführt werden. Danach erfolgt eine Rückführung des Arbeitsmediums in die Wärmetauschvorrichtung 10.

Je nach Betriebspunkt und Temperaturgefälle bzw. abhängig ob das Arbeitsmediums ein- oder zweiphasig genutzt wird, würde die Abwärmevorrichtung 22 Wärme Q3 in die Fahrzeugumgebung 2 abgeben oder alternativ dazu sogar Wärme Q4 aus der Fahrzeugumgebung 2 aufnehmen. Letzteres würde die Abwärmevorrichtung 22 faktisch in eine Wärmeaufnahmevorrichtung wandeln:

Nachdem nun das Arbeitsmediums durch die Verflüssigungseinrichtung 26 dem Heizkreis 21 zugeführt wird und diesen durchströmt, würde das nach der Vergasereinrichtung 27 zur Vorrichtung 22 strömende Arbeitsmediums Wärme Q4 aus der Fahrzeugumgebung 4 aufnehmen können. Dadurch erhöhte sich das Temperaturniveau des Arbeitsmediums insgesamt, wodurch die Heizleistung der Bodenheizvorrichtung 6 effektiv gesteigert werden könnte.

Die Beschreibung von unterschiedlichen Betriebszuständen ist nicht zwingend so zu verstehen, dass eine Ausführung alle Betriebszustände einnehmen können muss. Vielmehr dienen die Betriebszustände dazu unterschiedliche und unabhängige Ausführungsformen des Fahrzeugs exemplarisch darzulegen, wobei ein Ausführungsbeispiel möglicherweise nur einen einzigen Betriebszustand oder mehrere Betriebszustände realisieren kann.

Die Steuervorrichtung 30 steuert damit verbundene Komponenten, insbesondere die Fluidmanipulatoren 24 und 25, zur Realisierung der unterschiedlichen Betriebszustände je nach Trocknungsbedarf des Bodens 6 an. Der Trocknungsbedarf wird über eine Feuchtedetektionseinrichtung zum Bestimmen einer Feuchtigkeit des Bodens 6 und/oder über eine Bestimmung eines Trocknungskriteriums bestimmt. Dazu ist die Steuervorrichtung 30 mit Temperatur- und Luftfeuchtigkeitssensoren 32, 33, 34 und 35 und mit einem Feuchtesensor 31 des Bodens 6 verbunden. Weiterhin kann die Steuervorrichtung mit dem Regensensor 36 verbunden sein. Auf Basis einzelner oder einer Mehrzahl der so empfangenen Daten ist die Steuervorrichtung 30 in der Lage, das Trocknungskriterium zu bestimmen. Bei Vorliegen eines positiven Trocknungskriteriums wird die Bodenheizvorrichtung 20 aktiviert, was eine Trocknung des Bodens 6 mittels Trocknungswärme Q2 bewirkt. Entsprechend könnte der Fluidmanipulator 24 so durch die Steuervorrichtung 30 angesteuert werden, sodass das erwärmte Arbeitsmediums aus der Wärmetauschvorrichtung 10 dem Heizkreis 21 zugeführt wird.

Wenngleich hierin eine spezifische Ausführungsform dargestellt und beschrieben worden sind, liegt es im Rahmen der vorliegenden Erfindung, die gezeigte Ausführungsform geeignet zu modifizieren, ohne vom Schutzbereich der vorliegenden Erfindung abzuweichen. Beispielsweise kann der Fluidkreislauf des Fahrzeugs 1 mit oder ohne einem optionalen Phasenübergang des Arbeitsmediums (flüssig - gasförmig) ausgestaltet werden. In einem solchen Fall wären die Verflüssigungseinrichtung 26 und die Vergasereinrichtung 27 aus dem Fluidkreislauf der Fig. 1 wegzudenken, bzw. es könnten schaltbare, parallel angeordnete Umgehungsverbindungen für die Verflüssigungseinrichtung 26 und die Vergasereinrichtung 27 vorgesehen sein, sodass der Fluidkreislauf ausschließlich mit einem flüssigen oder gasförmigen Arbeitsmedium betrieben wird. Weiterhin kann das gezeigte Fahrzeug 1 statt als Straßenbahn als Omnibus mit einer Stromversorgung durch eine Oberleitung (O-Bus) ausgebildet sein.

### Bezugszeichenliste

| | | | |
|---|---|---|---|
| 1 | Fahrzeug | | |
| 2 | Fahrzeugumgebung | Q1 | Abwärme |
| 3 | Wagenkasten | Q2 | Trocknungswärme |
| 4 | Innenraum | Q3 | abgegebene Wärme |
| 5 | Schiene | Q4 | aufgenommene Wärme |
| 6 | Boden | | |
| 7 | Stromabnehmer | | |
| 8 | Klimatisierungsvorrichtung | | |
| 10 | Komponentenwärmetauscher | | |
| 11 | Elektrischer Energiespeicher | | |
| 12 | Leistungselektronische Einrichtung | | |
| 13 | Fahrmotor | | |
| 14 | Bremswiderstand | | |
| 15 | Ladeeinrichtung | | |
| 20 | Bodenheizvorrichtung | | |
| 21 | Heizkreis | | |
| 22 | Wärmeabgabevorrichtung | | |
| 23 | Abwärmekreis | | |
| 24 | erster Fluidmanipulator | | |
| 25 | zweiter Fluidmanipulator | | |
| 26 | Verflüssigungseinrichtung | | |
| 27 | Vergasereinrichtung | | |
| 28 | Zulaufknoten | | |
| 29 | Rücklaufknoten | | |
| 30 | Steuerungsvorrichtung | | |
| 31 | Feuchtesensor | | |
| 32 | erster Luftfeuchtigkeitsmesseinrichtung (innen) | | |
| 33 | erster Temperaturmesseinrichtung (innen) | | |
| 34 | zweiter Luftfeuchtigkeitsmesseinrichtung (außen) | | |
| 35 | zweiter Temperaturmesseinrichtung (außen) | | |
| 36 | Regensensor | | |

## Patentansprüche

1. Fahrzeug (1) aufweisend
- einen Wagenkasten (3) mit einem Innenraum (4) und einem darin angeordneten Boden (6) zum Aufnehmen von Fahrgästen,
- mindestens eine Wärme-produzierende Komponente (11, 12, 13, 14, 15),
- eine Wärmeabgabevorrichtung (22) zum gezielten Abführen von Wärme in eine Fahrzeugumgebung (2),
- mindestens einen Abwärmekreis (23) ausgebildet zum Wärmetransport von mindestens der Komponente (11, 12, 13, 14, 15) zur Wärmeabgabevorrichtung (22),
- eine Bodenheizvorrichtung (20) zum Beheizen des Bodens (6),
- einen mit der Bodenheizvorrichtung (20) verbundenen Heizkreis (21), ausgebildet zum Wärmetransport von mindestens der Komponente (11, 12, 13, 14, 15) zur Bodenheizvorrichtung (20),
- mindestens eine Einstelleinrichtung zum Einstellen der Bodenheizvorrichtung (20),
- eine Feuchtedetektionseinrichtung (31, 36) zum Bestimmen einer Feuchtigkeit des Bodens (6), und
- eine Steuerungsvorrichtung (30), die zum Ansteuern der Einstelleinrichtung und zum Datenempfang von der Feuchtedetektionseinrichtung (31, 36) mit diesen verbunden ist, und die mindestens auf Basis von Daten der Feuchtedetektionseinrichtung (31, 36) zum Bestimmten eines Trocknungskriteriums ausgebildet ist,
- wobei die Steuervorrichtung (30) und die Einstelleinrichtung derart ausgebildet sind, dass in Abhängigkeit des Trocknungskriteriums die Bodenheizvorrichtung (20) aktiviert wird,
- wobei die Einstelleinrichtung zum Einstellen eines Wärmetransports von der Komponente (11, 12, 13, 14, 15) zur Bodenheizvorrichtung (20) und/oder zur Wärmeabgabevorrichtung (22) ausgebildet ist, und wobei die Steuervorrichtung (30) und die Einstelleinrichtung derart ausgebildet sind, dass beim Vorliegen eines definierten Trocknungskriteriums ein Wärmetransport von der Komponente (11, 12, 13, 15) zur Bodenheizvorrichtung (20) ausgeführt wird.

2. Fahrzeug (1) nach Anspruch 1, wobei die Feuchtedetektionseinrichtung (31, 36) mindestens einen Feuchtesensor (31) zur Detektion von Feuchtigkeit des Bodens (6) und/oder einen Regensensor (36) zur Detektion von Regen in der Fahrzeugumgebung (2) aufweist.

3. Fahrzeug (1) einem der voranstehenden Ansprüche, wobei die Feuchtedetektionseinrichtung (31, 36) dazu eingerichtet ist, Daten über einen Wetterzustand der Fahrzeugumgebung (2) aus einer dritten Quelle, insbesondere aus dem Internet und/oder von einem Online-Wetterdatenservice, zu empfangen und dahingehend auszuwerten, ob Nässe in der Fahrzeugumgebung (2) vorhanden ist.

4. Fahrzeug (1) einem der voranstehenden Ansprüche, aufweisend eine erste Luftfeuchtigkeitsmesseinrichtung (32) zum Messen einer Luftfeuchtigkeit im Innenraum (4) und/oder eine erste Temperaturmesseinrichtung (33) zum Messen einer Innentemperatur.

5. Fahrzeug (1) einem der voranstehenden Ansprüche, aufweisend eine Klimatisierungsvorrichtung (8) zum Manipulieren eine Innentemperatur und/oder eine Luftfeuchtigkeit in dem Innenraum (4).

6. Fahrzeug (1) nach Anspruch 5, aufweisend eine zweite Luftfeuchtigkeitsmesseinrichtung (34) zum Messen einer Luftfeuchtigkeit der Fahrzeugumgebung (2) und/oder eine zweite Temperaturmesseinrichtung (35) zum Messen einer Umgebungstemperatur.

7. Fahrzeug (1) nach einem der voranstehenden Ansprüche, wobei die Komponente (11, 12, 13, 14, 15) als Fahrmotor (13) des Fahrzeugs (1), ein elektrischer Energiespeicher (11), eine Ladeeinrichtung (15) für einen elektrischen Energiespeicher, leistungselektronische Einrichtungen (12), insbesondere für den Fahrmotor (13), Bordnetzumrichter, Bremswiderstand (14), Kompressor und/oder nicht als Brennstoffzelle ausgebildet ist.

8. Fahrzeug (1) nach einem der voranstehenden Ansprüche 1 bis 7, aufweisend ein Arbeitsmedium zum Transport der Wärme der Komponente (11, 12, 13, 14, 15) in den Heizkreis (21) und/oder in den Abwärmekreis (23), wobei das Arbeitsmedium zumindest während eines Wärmeübergangs von der Komponente (11, 12, 13, 14, 15) in das Arbeitsmedium eine Flüssigkeit ist.

9. Fahrzeug (1) nach einem der voranstehenden Ansprüche 1 bis 8, aufweisend einen Fluidkreislauf mit einem Phasenübergang des Arbeitsmediums, wobei der Heizkreis (21) und/oder der Abwärmekreis (23) zumindest Teil des Fluidkreislaufs ist/sind, und mindestens eine Verflüssigungseinrichtung (26) und Vergasereinrichtung (27), insbesondere im Heizkreis (21) und/oder im Abwärmekreis (23), vorgesehen ist/sind.

10. Fahrzeug (1) nach einem der voranstehenden Ansprüche 1 bis 9, wobei die Einstelleinrichtung, der Heizkreis (21) und der Abwärmekreis (23) derart ausgebildet und/oder schaltbar sind,
- dass gemäß einem ersten Betriebszustand ein Wärmetransport ausschließlich innerhalb des Heizkreises (21) stattfindet, und/oder
- dass gemäß einem zweiten Betriebszustand ein Wärmetransport ausschließlich innerhalb des Abwärmekreises (23) stattfindet, und/oder
- dass Heizkreis (21) und Abwärmekreis (23) gemäß einem dritten Betriebszustand zumindest in Abschnitten parallel zueinander schaltbar sind, und/oder
- dass Heizkreis (21) und Abwärmekreis (23) gemäß einem vierten Betriebszustand zumindest in Abschnitten seriell zueinander schaltbar sind.

11. Verfahren zum Betrieb eines Fahrzeugs (1), wobei das Fahrzeug (1) einen Wagenkasten (3) mit einem Innenraum (4) und einen darin angeordneten Boden (6) zum Aufnehmen von Fahrgästen, mindestens eine Wärme-produzierende Komponente (11, 12, 13, 14, 15), eine Wärmeabgabevorrichtung (22) zum gezielten Abführen von Wärme in eine Fahrzeugumgebung (2), mindestens einen Abwärmekreis (23) ausgebildet zum Wärmetransport von mindestens der Komponente (11, 12, 13, 14, 15) zur Wärmeabgabevorrichtung (22), eine Bodenheizvorrichtung (20) zum Beheizen des Bodens (6), einen mit der Bodenheizvorrichtung (20) verbundenen Heizkreis (21), ausgebildet zum Wärmetransport von mindestens der Komponente (11, 12, 13, 14, 15) zur Bodenheizvorrichtung (20), mindestens eine Einstelleinrichtung zum Einstellen der Bodenheizvorrichtung (20), eine Feuchtedetektionseinrichtung, und eine Steuerungsvorrichtung (30), die zum Ansteuern der Einstelleinrichtung und zum Datenempfang von der Feuchtedetektionseinrichtung mit diesen verbunden ist, das Verfahren aufweisend die Schritte:
- Erzeugen eines Signals durch die Feuchtedetektionseinrichtung, das den Grad der Feuchtigkeit des Bodens (6) und/oder das Vorhandensein von Wasser auf dem Boden (6) repräsentiert;
- Ableiten eines Trocknungskriteriums mindestens auf Basis des Signals der Feuchtedetektionseinrichtung (31, 36);
- Aktivieren der Bodenheizvorrichtung (20) in Abhängigkeit von dem Trocknungskriterium,
wobei das Trocknungskriterium als positives oder negatives Trocknungskriterium vorliegen kann, aufweisend den Schritt:
- Prüfen eines Trocknungskriteriums,
- wenn ein positives Trocknungskriterium vorliegt, Ansteuern der Einstelleinrichtung derart, dass ein Wärmetransport von der Komponente (11, 12, 13, 14, 15) zur Bodenheizvorrichtung (20) stattfindet.

12. Verfahren nach Anspruch 11, wobei das Trocknungskriterium mindestens unter Verwendung von Daten eines Regensensor (36) zum Detektieren von Regen in der Fahrzeugumgebung (2), eines Feuchtesensors (21) zum Detektieren von Feuchtigkeit des Bodens (6), einer Luftfeuchtigkeitsmesseinrichtung (32) zum Messen einer Luftfeuchtigkeit im Innenraum (4), und/oder einer ersten Temperaturmesseinrichtung (33) zum Messen einer Innentemperatur im Innenraum (4), und/oder auf Basis einer Anzahl von einsteigenden Fahrgästen bestimmt wird.

13. Verfahren nach Anspruch 11 oder 12, wobei das Fahrzeug (1) eine erste Luftfeuchtigkeitsmesseinrichtung (32) zum Messen einer Luftfeuchtigkeit im Innenraum (4) und/oder eine erste Temperaturmesseinrichtung (33) zum Messen einer Innentemperatur im Innenraum (4) und/oder eine Klimatisierungsvorrichtung (8) zum Manipulieren eine Innentemperatur und/oder eine Luftfeuchtigkeit in dem Innenraum (4) aufweist, und wobei die Klimatisierungsvorrichtung (8) derart betrieben wird, sodass die Luftfeuchtigkeit in dem Innenraum (4) einen Schwellwert nicht überschreitet.

## Claims

1. A vehicle (1) comprising
- a vehicle body (3) having an inner space (4) and a floor (6) arranged therein for accommodating passengers,
- at least one heat-producing component (11, 12, 13, 14, 15),
- a heat release apparatus (22) for the specific dissipation of heat into an environment of the vehicle (2),
- at least one waste heat circuit (23) configured for heat transport from at least the component (11, 12, 13, 14, 15) to the heat release apparatus (22),
- a floor heating apparatus (20) for heating the floor (6),
- a heating circuit (21) connected to the floor heating apparatus (20) configured for heat transport from at least the component (11, 12, 13, 14, 15) to the floor heating apparatus (20),
- at least one adjustment device for adjusting the floor heating apparatus (20),
- a moisture detecting device (31, 36) for determining a moisture of the floor (6), and
- a control apparatus (30) which is connected to the adjustment device and the moisture detecting device (31, 36) for controlling the adjustment device and for data receiving from the moisture detecting device (31, 36), and which at least on the basis of data from the moisture detecting device (31, 36) is configured for determining a drying criterion,
- wherein the control apparatus (30) and the adjustment device are configured such that depending on the drying criterion the floor heating apparatus (20) is activated,
- wherein the adjustment device is configured for adjustment of a heat transport from the component (11, 12, 13, 14, 15) to the floor heating apparatus (20) and/or to the heat release apparatus (22), and wherein the control apparatus (30) and the adjustment device are configured such that, in the event of a defined drying criterion, a heat transport from the component (11, 12, 13, 15) to the floor heating apparatus (20) is carried out.

2. Vehicle (1) according to claim 1, wherein the moisture detecting device (31, 36) comprises at least one moisture sensor (31) for the detection of moisture of the floor (6) and/or a rain sensor (36) for the detection of rain in the environment of the vehicle (2).

3. Vehicle (1) one of the preceding claims, wherein the moisture detecting device (31, 36) is configured to receive data on a weather condition of the environment of the vehicle (2) from a third source, in particular from the internet and/or from an online weather data service, and to evaluate it to determine whether wetness is present in the environment of the vehicle (2).

4. Vehicle (1) one of the preceding claims, comprising a first air humidity measuring device (32) for measuring an air humidity in the inner space (4) and/or a first temperature measuring device (33) for measuring an inner temperature.

5. Vehicle (1) one of the preceding claims, comprising an air conditioning apparatus (8) for manipulating an inner temperature and/or an air humidity in the inner space (4).

6. Vehicle (1) according to claim 5, comprising a second air humidity measuring device (34) for measuring an air humidity of the environment of the vehicle (2) and/or a second temperature measuring device (35) for measuring an ambient temperature.

7. Vehicle (1) according to one of the preceding claims, wherein the component (11, 12, 13, 14, 15) is formed as a drive motor (13) of the vehicle (1), an electrical energy storage (11), a charging device (15) for an electrical energy storage, power electronic devices (12), in particular for the drive motor (13), on-board converter, brake resistor (14), compressor and/or not as a fuel cell.

8. Vehicle (1) according to one of the preceding claims 1 to 7, comprising a working medium for transport of the heat of the component (11, 12, 13, 14, 15) into the heating circuit (21) and/or into the waste heat circuit (23), wherein the working medium is a liquid at least during a heat transfer from the component (11, 12, 13, 14, 15) into the working medium.

9. Vehicle (1) according to one of the preceding claims 1 to 8, comprising a fluid circuit with a phase transition of the working medium, wherein the heating circuit (21) and/or the waste heat circuit (23) is/are at least part of the fluid circuit, and at least one condensation device (26) and gasification device (27) is/are provided, in particular in the heating circuit (21) and/or in the waste heat circuit (23).

10. Vehicle (1) according to one of the preceding claims 1 to 9, wherein the adjustment device, the heating circuit (21) and the waste heat circuit (23) are configured and/or switchable such
- that, according to a first operating state, a heat transport takes place exclusively within the heating circuit (21), and/or
- that, according to a second operating state, a heat transport takes place exclusively within the waste heat circuit (23), and/or
- that, according to a third operating state, heating circuit (21) and waste heat circuit (23) are switchable at least in portions in parallel with one another, and/or
- that, according to a fourth operating state, heating circuit (21) and waste heat circuit (23) are switchable at least in portions in series with one another.

11. Method for operating a vehicle (1), wherein the vehicle (1) a vehicle body (3) with an inner space (4) and a floor (6) arranged therein for accommodating passengers, at least one heat-producing component (11, 12, 13, 14, 15), a heat release apparatus (22) for the specific dissipation of heat into an environment of the vehicle (2), at least one waste heat circuit (23) configured for heat transport from at least the component (11, 12, 13, 14, 15) to the heat release apparatus (22), a floor heating apparatus (20) for heating the floor (6), a heating circuit (21) connected to the floor heating apparatus (20) configured for heat transport from at least the component (11, 12, 13, 14, 15) to the floor heating apparatus (20), at least one adjustment device for adjusting the floor heating apparatus (20), a moisture detecting device, and a control apparatus (30) which is connected to the adjustment device and the moisture detecting device for controlling the adjustment device and for data receiving from the moisture detecting device, the method comprising the steps of:
- generating a signal by the moisture detecting device representing the degree of moisture of the floor (6) and/or the presence of water on the floor (6);
- deriving a drying criterion at least on the basis of the signal from the moisture detecting device (31, 36);
- activating the floor heating apparatus (20) depending on the drying criterion,
wherein the drying criterion may be present as a positive or negative drying criterion, comprising the step of:
- examining a drying criterion,
- when a positive drying criterion is present, controlling the adjustment device such that a heat transport from the component (11, 12, 13, 14, 15) to the floor heating apparatus (20) takes place.

12. Method according to claim 11, wherein the drying criterion is determined at least by using data from a rain sensor (36) for the detection of rain in the environment of the vehicle (2), a moisture sensor (21) for the detection of moisture of the floor (6), an air humidity measuring device (32) for measuring an air humidity in the inner space (4), and/or a first temperature measuring device (33) for measuring an inner temperature in the inner space (4), and/or on the basis of a number of boarding passengers.

13. Method according to claim 11 or 12, wherein the vehicle (1) comprises a first air humidity measuring device (32) for measuring an air humidity in the inner space (4) and/or a first temperature measuring device (33) for measuring an inner temperature in the inner space (4) and/or an air conditioning apparatus (8) for manipulating an inner temperature and/or an air humidity in the inner space (4), and wherein the air conditioning apparatus (8) is operated such that the air humidity in the inner space (4) does not exceed a threshold value.

## Revendications

1. Véhicule (1) présentant
- une caisse de voiture (3) comportant un espace intérieur (4) et un plancher (6) disposé dans celui-ci pour la réception de passagers,
- au moins un composant (11, 12, 13, 14, 15) produisant de la chaleur,
- un dispositif de dissipation de chaleur (22) pour l'évacuation ciblée de chaleur dans un environnement de véhicule (2),
- au moins un circuit de chaleur dissipée (23) conçu pour le transport de chaleur depuis au moins le composant (11, 12, 13, 14, 15) vers le dispositif de dissipation de chaleur (22),
- un dispositif de chauffage de plancher (20) pour le chauffage du plancher (6),
- un circuit de chauffage (21) relié au dispositif de chauffage de plancher (20), conçu pour le transport de chaleur depuis au moins le composant (11, 12, 13, 14, 15) vers le dispositif de chauffage de plancher (20),
- au moins un appareil de réglage pour le réglage du dispositif de chauffage de plancher (20),
- un appareil de détection d'humidité (31, 36) pour la détermination de l'humidité du plancher (6), et
- un dispositif de commande (30) qui est connecté à l'appareil de réglage et à l'appareil de détection d'humidité pour la commande de l'appareil de réglage et pour la réception de données en provenance de l'appareil de détection d'humidité (31, 36), et qui est configuré pour la détermination d'un critère de séchage au moins sur la base de données de l'appareil de détection d'humidité (31, 36),
- dans lequel le dispositif de commande (30) et l'appareil de réglage sont configurés de telle sorte que le dispositif de chauffage de plancher (20) est activé en fonction du critère de séchage,
- dans lequel l'appareil de réglage est configuré pour le réglage d'un transport de chaleur depuis le composant (11, 12, 13, 14, 15) vers le dispositif de chauffage de plancher (20) et/ou vers le dispositif de dissipation de chaleur (22), et dans lequel le dispositif de commande (30) et l'appareil de réglage sont configurés de telle sorte que, en présence d'un critère de séchage défini, un transport de chaleur depuis le composant (11, 12, 13, 15) vers le dispositif de chauffage de plancher (20) est effectué.

2. Véhicule (1) selon la revendication 1, dans lequel l'appareil de détection d'humidité (31, 36) présente au moins un capteur d'humidité (31) pour la détection de l'humidité du plancher (6) et/ou un capteur de pluie (36) pour la détection de pluie dans l'environnement de véhicule (2).

3. Véhicule (1) selon l'une des revendications précédentes, dans lequel l'appareil de détection d'humidité (31, 36) est configuré pour recevoir des données concernant un état météorologique de l'environnement de véhicule (2) à partir d'une source tierce, en particulier à partir d'Internet et/ou d'une source de données météorologiques en ligne, et pour évaluer à cet effet si de l'humidité est présente dans l'environnement de véhicule (2).

4. Véhicule (1) selon l'une des revendications précédentes, présentant un premier appareil de mesure d'humidité de l'air (32) pour la mesure de l'humidité de l'air dans l'espace intérieur (4) et/ou un premier appareil de mesure de température (33) pour la mesure d'une température intérieure.

5. Véhicule (1) selon l'une des revendications précédentes, présentant un dispositif de climatisation (8) pour la manipulation d'une température intérieure et/ou de l'humidité de l'air dans l'espace intérieur (4).

6. Véhicule (1) selon la revendication 5, présentant un second appareil de mesure d'humidité de l'air (34) pour la mesure de l'humidité de l'air de l'environnement de véhicule (2) et/ou un second appareil de mesure de température (35) pour la mesure d'une température ambiante.

7. Véhicule (1) selon l'une des revendications précédentes, dans lequel le composant (11, 12, 13, 14, 15) est conçu comme un moteur de traction (13) du véhicule (1), un accumulateur d'énergie électrique (11), un appareil de charge (15) pour un accumulateur d'énergie électrique, des appareils électroniques de puissance (12), en particulier pour le moteur de traction (13), un convertisseur de réseau de bord, une résistance de freinage (14), un compresseur, et/ou n'est pas conçu comme une cellule à combustible.

8. Véhicule (1) selon l'une des revendications précédentes 1 à 7, présentant un milieu de travail pour le transport de la chaleur du composant (11, 12, 13, 14, 15) dans le circuit de chauffage (21) et/ou dans le circuit de chaleur dissipée (23), dans lequel le milieu de travail est un liquide au moins pendant un transfert de chaleur depuis le composant (11, 12, 13, 14, 15) dans le milieu de travail.

9. Véhicule (1) selon l'une des revendications précédentes 1 à 8, présentant un circuit de fluide comportant une transition de phase du milieu de travail, dans lequel le circuit de chauffage (21) et/ou le circuit de chaleur dissipée (23) font au moins partie du circuit de fluide, et au moins un appareil de liquéfaction (26) et un appareil de vaporisation (27) sont prévus, en particulier dans le circuit de chauffage (21) et/ou dans le circuit de chaleur dissipée (23).

10. Véhicule (1) selon l'une des revendications précédentes 1 à 9, dans lequel l'appareil de réglage, le circuit de chauffage (21) et le circuit de chaleur dissipée (23) sont conçus et/ou peuvent être commutés de telle sorte
- que, selon un premier état de fonctionnement, un transport de chaleur a lieu exclusivement à l'intérieur du circuit de chauffage (21), et/ou
- que, selon un deuxième état de fonctionnement, un transport de chaleur a lieu exclusivement à l'intérieur du circuit de chaleur dissipée (23), et/ou
- que le circuit de chauffage (21) et le circuit de chaleur dissipée (23) peuvent être commutés en parallèle l'un par rapport à l'autre selon un troisième état de fonctionnement, au moins dans des sections, et/ou
- que le circuit de chauffage (21) et le circuit de chaleur dissipée (23) peuvent être commutés en série l'un par rapport à l'autre selon un quatrième état de fonctionnement, au moins dans des sections.

11. Procédé permettant de faire fonctionner un véhicule (1), dans lequel le véhicule (1) une caisse de voiture (3) comportant un espace intérieur (4) et un plancher (6) disposé dans celui-ci pour la réception de passagers, au moins un composant (11, 12, 13, 14, 15) produisant de la chaleur, un dispositif de dissipation de chaleur (22) pour l'évacuation ciblée de chaleur dans un environnement de véhicule (2), au moins un circuit de chaleur dissipée (23) conçu pour le transport de chaleur depuis au moins le composant (11, 12, 13, 14, 15) vers le dispositif de dissipation de chaleur (22), un dispositif de chauffage de plancher (20) pour le chauffage du plancher (6), un circuit de chauffage (21) relié au dispositif de chauffage de plancher (20), conçu pour le transport de chaleur depuis au moins le composant (11, 12, 13, 14, 15) vers le dispositif de chauffage de plancher (20), au moins un appareil de réglage pour le réglage du dispositif de chauffage de plancher (20), un appareil de détection d'humidité, et un dispositif de commande (30) qui est connecté à l'appareil de réglage et à l'appareil de détection d'humidité pour la commande de l'appareil de réglage et pour la réception de données en provenance de l'appareil de détection d'humidité, le procédé présentant les étapes suivantes :
- génération d'un signal par l'appareil de détection d'humidité, lequel signal représente le degré d'humidité du plancher (6) et/ou la présence d'eau sur le plancher (6) ;
- déduction d'un critère de séchage au moins sur la base du signal de l'appareil de détection d'humidité (31, 36) ;
- activation du dispositif de chauffage de plancher (20) en fonction du critère de séchage,
dans lequel le critère de séchage peut exister en tant que critère de séchage positif ou négatif, présentant l'étape suivante :
- vérification d'un critère de séchage,
- s'il existe un critère de séchage positif, commande de l'appareil de réglage de telle sorte qu'un transport de chaleur a lieu depuis le composant (11, 12, 13, 14, 15) vers le dispositif de chauffage de plancher (20).

12. Procédé selon la revendication 11, dans lequel le critère de séchage est déterminé au moins à l'aide de données d'un capteur de pluie (36) pour la détection de pluie dans l'environnement de véhicule (2), d'un capteur d'humidité (21) pour la détection de l'humidité du plancher (6), d'un appareil de mesure d'humidité de l'air (32) pour la mesure de l'humidité de l'air dans l'espace intérieur (4) et/ou d'un premier appareil de mesure de température (33) pour la mesure d'une température intérieure dans l'espace intérieur (4), et/ou sur la base d'un nombre de passagers embarquants.

13. Procédé selon la revendication 11 ou 12, dans lequel le véhicule (1) présente un premier appareil de mesure d'humidité de l'air (32) pour la mesure de l'humidité de l'air dans l'espace intérieur (4) et/ou un premier appareil de mesure de température (33) pour la mesure d'une température intérieure dans l'espace intérieur (4) et/ou un dispositif de climatisation (8) pour la manipulation d'une température intérieure et/ou de l'humidité de l'air dans l'espace intérieur (4), et dans lequel le dispositif de climatisation (8) fonctionne de telle sorte que l'humidité de l'air dans l'espace intérieur (4) ne dépasse pas une valeur seuil.
